# FASCICULE DE BREVET EUROPEEN

(11) **EP 4 308 800 B1**
(45) Date de publication et mention de la délivrance du brevet: **29.04.2026**
(21) Numéro de dépôt: 22713708.0
(22) Date de dépôt: 09.03.2022
(51) Int. Cl.: F01D 25/16, F02C 7/06, F04D 29/056, F16C 27/04, F16F 15/023

(54) **DISPOSITIF DE CENTRAGE ET DE GUIDAGE D'UN ARBRE DE TURBOMACHINE D'AÉRONEF**
ZENTRIER- UND FÜHRUNGSVORRICHTUNG FÜR EINE FLUGZEUG-TURBOMASCHINENWELLE
CENTERING AND GUIDING DEVICE FOR AN AIRCRAFT TURBOMACHINE SHAFT

(30) Priorité: 18.03.2021 FR 2102711
(43) Date de publication de la demande: 24.01.2024
(73) Titulaire: SAFRAN AIRCRAFT ENGINES, 75015 Paris (FR)
(72) Inventeur: LEVISSE, Paul Ghislain Albert, 77550 MOISSY-CRAMAYEL (FR); BARET, Emmanuel Fabrice Marie, 77550 MOISSY-CRAMAYEL (FR); BECOULET, Julien Fabien Patrick, 77550 MOISSY-CRAMAYEL (FR); TAN-KIM, Alexandre Jean-Marie, 77550 MOISSY-CRAMAYEL (FR)
(74) Mandataire: Gevers & Orès
(86) Numéro de dépôt international: PCT/FR2022/050425
(87) Numéro de publication internationale: WO 2022/195198

(56) Documents cités:
- CN-A- 103 244 276
- FR-A1- 2 519 101
- FR-A1- 3 091 902
- GB-A- 2 111 137
- GB-A- 2 310 258
- US-A1- 2016 177 765

## Description

### Domaine technique de l'invention

La présente invention concerne un dispositif de centrage et de guidage d'un arbre de turbomachine d'aéronef, ainsi qu'une turbomachine d'aéronef.

### Arrière-plan technique

Une turbomachine d'aéronef comprend des arbres, tels qu'un arbre basse pression et un arbre haute pression, qui sont centrés et guidés en rotation par des paliers, en général à roulement et par exemple à rouleaux ou billes. Un palier à roulement comprend des bagues externe et interne entre lesquelles sont disposés les rouleaux ou les billes. La bague interne est solidaire de l'arbre à guider et la bague externe est fixée à un support de palier qui est une pièce rigide de stator de la turbomachine.

Un arbre de turbomachine peut atteindre un régime très important, typiquement entre 2 000 et 30 000 tours par minute. De tels régimes induisent des excitations des modes propres des arbres qui peuvent avoir des effets néfastes sur le moteur si le mode répond fortement.

Afin de contrôler la position du mode, les paliers sont en général associés à des cages souples qui permettent d'assouplir les conditions aux limites de l'arbre et qui abaissent la fréquence du mode propre. Cela peut permettre d'abaisser le mode en dessous de la plage de fonctionnement.

On entend par « cage souple », un organe ou un assemblage qui assure une liaison souple entre la bague externe d'un palier et son support. La souplesse de cette cage est en général assurée par une capacité de déformation élastique de cette cage, par exemple en torsion et/ou en flexion. Pour conférer cette capacité, la cage comprend au moins une série de colonnettes réparties autour de l'axe du palier et s'étendant sensiblement parallèlement à cet axe.

Il existe à ce jour deux technologies de cage souple pour palier.

La première technologie décrite dans les documents FR-A1-3 009 843 et FR-A1-3 078 370 est une cage souple monobloc. Une cage de ce type comprend en général une paroi cylindrique interne à laquelle la bague externe du palier est fixée ou intégrée, et une paroi cylindrique externe ou une bride de fixation au support de palier. Les parois sont reliées entre elles par une série de colonnettes ayant une forme générale en C ou deux séries de colonnettes s'étendant l'une autour de l'autre et reliées ensemble. Les colonnettes et les parois sont alors formées d'une seule pièce.

Une seconde technologie décrite dans le document FR-A1-3 009 843 concerne une cage obtenue par assemblage de colonnettes indépendantes avec le support et la bague. Chaque colonnette comporte un corps de forme allongée et relié à une première extrémité longitudinale de fixation au support et à une seconde extrémité longitudinale de fixation à la bague.

Dans la technique actuelle, le corps a en section transversale une forme circulaire c'est-à-dire une forme axisymétrique (la forme en section du corps de la colonnette présente une symétrie par rapport à l'axe longitudinal de ce corps). La cage souple équipée de ces colonnettes a également une forme axisymétrique et sa raideur est identique quelle que soit la direction transversale des efforts de sollicitation de la cage.

L'état de la technique comprend également des technologies décrites par FR-A1-3 091 902, FR-A1-2 519 101, GB-A-2 310 258, US-A1-2016/177765, GB-A-2 111 137 ou CN-B-103 244 276.

L'invention propose un perfectionnement à cette seconde technologie, qui permet notamment d'adapter la raideur de la cage souple en fonction de la direction de sollicitation.

### Résumé de l'invention

L'invention propose un dispositif de centrage et de guidage d'un arbre de turbomachine d'aéronef, ce dispositif comportant :
- une bague externe d'un palier à roulement, cette bague s'étendant autour d'un axe et comprenant des orifices disposés autour de cet axe et orientés parallèlement à cet axe,
- un support annulaire de palier s'étendant autour de l'axe et au moins en partie autour de la bague, ce support comprenant des orifices disposés autour de cet axe et orientés parallèlement à cet axe, et
- une série de colonnettes de liaison de la bague au support, ces colonnettes étant réparties autour de l'axe et s'étendant sensiblement parallèlement à cet axe, chacune de ces colonnettes comportant une première extrémité longitudinale engagée dans un des orifices de la bague et une seconde extrémité longitudinale engagée dans un des orifices du support,
caractérisé en ce que certaines des colonnettes, appelées premières colonnettes, ont leurs extrémités qui sont engagées sans jeu dans les orifices de la bague et dans les orifices du support, et les autres colonnettes, appelées secondes colonnettes, ont leurs extrémités qui sont engagées avec jeux dans les orifices de la bague et/ou dans les orifices du support, les jeux étant configurés pour que le dispositif ait des raideurs différentes dans au moins deux directions perpendiculaires audit axe.

Quelle que soit la position des colonnettes autour de leurs axes respectifs, un dispositif selon la technique antérieure équipée de colonnettes à corps axisymétriques, possède une même raideur dans toutes les directions transversales (perpendiculaires à l'axe). Cela signifie que la raideur du dispositif dans une première direction perpendiculaire à l'axe (par exemple dans un plan horizontal) est identique à la raideur du dispositif dans une seconde direction perpendiculaire à l'axe (par exemple dans un plan vertical).

L'invention permet au contraire de conférer au dispositif des raideurs différentes selon les directions transversales de sollicitation. En effet, les jeux sont orientés dans une direction donnée pour que le dispositif ait une raideur plus faible lorsqu'il est sollicité dans cette direction donnée. Avantageusement, le dispositif comprend deux raideurs différentes en directions transversales. Il est en effet particulièrement intéressant pour stabiliser un arbre de fournir des raideurs différentes dans deux directions transversales et perpendiculaires entre elles car cela permet de repousser la vitesse d'apparition d'instabilités de l'arbre guidé par le dispositif. Grâce à la formation de la cage souple par assemblage de colonnettes, l'invention est avantageuse car elle permet une multitude de configurations possibles en limitant le coût du dispositif. Dans le cadre d'une cage souple monobloc par exemple, un changement de caractéristique impliquerait la réalisation d'une nouvelle pièce. En phase de développement cela impliquerait des coûts et des délais supplémentaires, surtout en cas d'erreur de dimensionnement de la pièce prototype. Le délai de réalisation d'une nouvelle pièce serait incompressible.

Il est, en outre, entendu que l'invention couvre toutes les combinaisons de forme pour les sections transversales des extrémités des colonnettes et des orifices respectifs de la bague et du support. Ces formes peuvent être choisies de manière non limitative parmi une forme circulaire ou non circulaire comme oblongue, elliptique, rectangulaire ou trapézoïdale.

Le dispositif selon l'invention peut comprendre une ou plusieurs des caractéristiques ci-dessous, prises isolément les unes avec les autres ou en combinaison les unes avec les autres :
-- avec une sollicitation du dispositif dans une première direction perpendiculaire à l'axe les secondes colonnettes se déplacent dans les jeux et les premières colonnettes restent immobiles, et avec une sollicitation du dispositif dans une deuxième direction perpendiculaire à l'axe, différente de la première direction, les premières et les secondes colonnettes restent immobiles dans leurs orifices respectifs ;

- les directions sont perpendiculaires entre elles ;
- les premières colonnettes sont alternées avec les secondes colonnettes autour de l'axe ;
- les premières et secondes extrémités des colonnettes ont en section une forme circulaire ;
- les orifices de la bague et du support comprennent des premiers orifices ayant en section une forme circulaire, et des seconds orifices ayant en section une forme oblongue ou en ellipse ;
- les seconds orifices sont orientés de façon à ce qu'ils présentent une forme allongée dans une même direction ;
- les orifices sont ménagés dans des brides annulaires de la bague et du support ;
- la bague externe comprend une surface cylindrique externe définissant avec une surface cylindrique interne du support un espace annulaire de formation d'un film d'huile d'amortissement.

L'invention concerne également une turbomachine d'aéronef, comportant au moins un dispositif tel que décrit dans ce qui précède.

### Brève description des figures

D'autres caractéristiques et avantages de l'invention apparaitront au cours de la lecture de la description détaillée qui va suivre pour la compréhension de laquelle on se reportera aux dessins annexés dans lesquels :
[Fig.1] La figure 1 est une vue schématique en coupe axiale et en perspective d'un dispositif de guidage et de centrage d'un palier de turbomachine d'aéronef, selon la technique antérieure ;
[Fig.2] La figure 2 est une vue schématique en coupe axiale d'un autre dispositif de guidage et de centrage d'un palier de turbomachine d'aéronef, selon la technique antérieure ;
[Fig.3] La figure 3 est une vue très schématique en coupe d'un dispositif de guidage et de centrage d'un palier de turbomachine d'aéronef selon une forme de réalisation de l'invention ;
[Fig.4] La figure 4 est une vue schématique en coupe axiale du dispositif de de la figure 3 selon l'axe de coupe I-I ;
[Fig.5] La figure 5 est une vue schématique en coupe axiale du dispositif de de la figure 3 selon l'axe de coupe II-II ; et
[Fig.6] La figure 6 est une vue schématique en coupe axiale du dispositif de de la figure 3 selon l'axe de coupe III-III.

### Description détaillée de l'invention

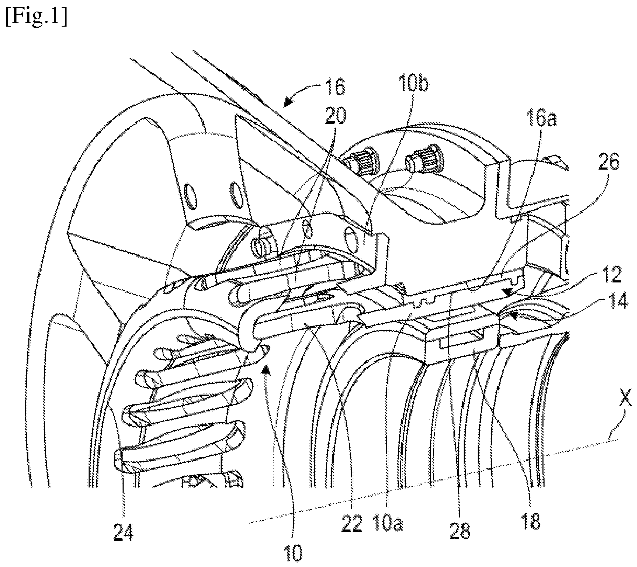

On se réfère d'abord à la figure 1 qui représente une première technologie de cage souple monobloc 10 selon la technique antérieure.

La cage souple 10 assure la liaison d'une bague externe 12 d'un palier à roulement 14 à un support annulaire 16 de ce palier 14.

Le palier 14 comporte, en plus de la bague externe 12, une bague interne 18 qui est solidaire d'un arbre de la turbomachine qui n'est pas représenté. Les bagues 12, 18 définissent un chemin de roulement de rouleaux dans l'exemple représenté.

La bague externe 12 est ici intégrée à une paroi cylindrique interne 10a de la cage 10 qui comprend une bride annulaire 10b radialement externe de fixation au support 16 par des moyens du type vis-écrou non représentés.

La cage 10 comprend ici deux séries de colonnettes 20, 22, respectivement radialement interne et externe par rapport à l'axe X du palier 14 et de l'arbre qu'il guide.

Les colonnettes 20, 22 sont réparties autour de l'axe X et s'étendent parallèlement à cet axe. Les colonnettes 20 s'étendent autour des colonnettes 22 et ont une première de leurs extrémités longitudinales qui est reliée à la bride 10b, et une seconde de leurs extrémités longitudinales qui est reliée aux autres colonnettes 22 par une portion annulaire 24 à section en C de la cage 10. Les colonnettes 22 s'étendent depuis la paroi 10a, dans le prolongement de celle-ci, jusqu'à cette portion 24.

Le support 16 fait partie d'un stator de la turbomachine et a ici une forme générale sensiblement tronconique. A sa périphérie interne, il comprend une surface cylindrique interne 16a de frettage d'un anneau 26 qui s'étend autour de la paroi 10a de la cage et qui définit avec celle-ci un espace annulaire 28 alimenté en huile afin de former un film d'huile d'amortissement des vibrations transmises par le palier 14 en fonctionnement.

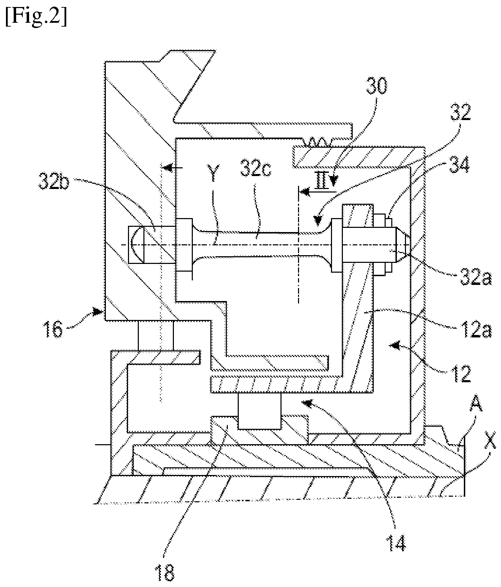

La figure 2 représente une seconde technologie de cage souple 30 à colonnettes 32 indépendantes, selon la technique antérieure.

La cage souple 30 assure également la liaison d'une bague externe 12 d'un palier à roulement 14 à un support annulaire 16 de ce palier 14.

Le palier 14 comporte, en plus de la bague externe 12, une bague interne 18 qui est solidaire d'un arbre A de la turbomachine. Les bagues 12, 18 définissent un chemin de roulement de rouleaux dans l'exemple représenté. La bague externe 12 comprend une bride annulaire 12a radialement externe qui comprend des orifices traversés par des extrémités 32a des colonnettes 32. Ces extrémités 32a sont filetées et reçoivent des écrous 34 serrés contre la bride 12a.

Les extrémités 32b opposées des colonnettes 32 sont fixées dans des trous du support 16.

La cage 30 comprend ici une série de colonnettes 32 qui sont réparties autour de l'axe X et s'étendent parallèlement à cet axe. Les colonnettes 32 comportent chacune un corps 32c qui a en section une forme circulaire, et donc symétriques par rapport à leur axe Y. Les colonnettes 32 sont également symétriques entre elles par rapport à l'axe X.

La cage souple 30 est ainsi « axisymétrique », et la raideur de la cage 10 et du palier 14 est donc la même dans toutes les directions transversales (perpendiculaires à l'axe X).

Cependant, d'un point de vue dynamique, il peut être intéressant d'avoir des raideurs différentes dans deux directions orthogonales : cela fournit un effet stabilisateur au dispositif en repoussant la vitesse d'apparition d'instabilités dues à l'amortissement interne de l'arbre.

En effet, en créant des souplesses différentes selon au moins deux directions, on observe l'apparition d'au moins deux modes contre un seul et unique mode dans le cas axisymétrique.

Dans le cas où la raideur radiale initiale de la cage souple axisymétrique K est telle que K1<K<K2 où K1 et K2 sont les raideurs de la cage souple asymétrique respectivement dans les directions différentes 1 et 2 transverses à l'axe X, alors les fréquences des modes créés encadreront la fréquence du mode unique initial.

Dans ce cas, la fréquence d'apparition possible des instabilités est augmentée, ce qui permet de limiter le risque d'instabilité potentiellement dommageable pour le moteur.

Le contrôle des déplacements de l'arbre selon l'azimut peut aussi être exploité pour améliorer les performances du moteur. En effet, sous chargement mécanique ou thermique la carcasse du moteur se déforme, ces distorsions génèrent des ouvertures et fermetures de jeux différentes selon l'azimut. Cela implique une dégradation de la performance du moteur qui pourrait être limitée si le déplacement dynamique est optimisé pour compenser une partie de la distorsion, par exemple en raidissant la cage souple dans la direction de la fermeture de jeu et en l'assouplissant dans la direction de l'ouverture de jeu.

La présente invention permet de répondre à ce besoin grâce à des colonnettes axisymétriques dont certaines sont engagées sans jeu et d'autre sont montées avec jeux, dans la bague externe 12 et le support 16.

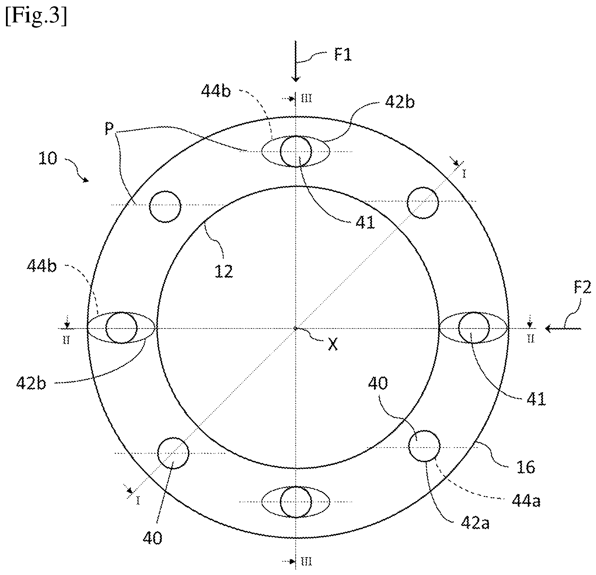

Les figures 3 à 6 illustrent un mode de réalisation d'un dispositif, selon l'invention, de centrage et de guidage d'un arbre de turbomachine d'aéronef. Le dispositif comprend :
- une bague externe 12 d'un palier à roulement 14, cette bague s'étendant autour d'un axe X et comprenant des orifices 42a, 42b disposés autour de cet axe X et orientés parallèlement à cet axe X,
- un support annulaire 16 de palier s'étendant autour de l'axe X et au moins en partie autour de la bague 12, ce support 16 comprenant des orifices 44a, 44b disposés autour de cet axe X et orientés parallèlement à cet axe X, et
- une série de colonnettes 40, 41 de liaison de la bague 12 au support 16.

Les colonnettes 40, 41 sont réparties autour de l'axe X et s'étendent sensiblement parallèlement à cet axe X. Chacune de ces colonnettes 40, 41 comporte un corps 40c, 41c de forme allongée s'étendant entre une première extrémité 40a, 41a longitudinale et une seconde extrémité 40b, 41b longitudinale. Chacune des premières extrémités 40a, 41a est engagée dans un des orifices 42a, 42b de la bague 12 et chacune des secondes extrémités 40b, 41b est engagée dans un des orifices 44a, 44b du support 16.

Des colonnettes 40, 41, on peut distinguer des premières colonnettes 40 et des secondes colonnettes 41. Les premières colonnettes 40 ont leurs extrémités 40a, 40b qui sont engagées sans jeu dans les orifices 42a, 44a de la bague 12 et du support 16. Les secondes colonnettes 41 ont leurs extrémités 41a, 41b qui sont engagées avec jeux dans les orifices 42b, 44b de la bague 12 et/ou du support 16. On comprend que la première extrémité 41a d'une colonnette 41 peut être engagée avec jeu dans un orifice 42b de la bague 12 et que la seconde extrémité 41b peut être engagée sans jeu dans un orifice 44b du support 16. On comprend aussi que la première extrémité 41a d'une colonnette 41 peut être engagée sans jeu dans un orifice 42b de la bague 12 et que la seconde extrémité 41b peut être engagée avec jeu dans un orifice 44b du support 16. On comprend encore que la première extrémité 41a d'une colonnette 41 peut être engagée avec jeu dans un orifice 42b de la bague 12 et que la seconde extrémité 41b peut être engagée avec jeu dans un orifice 44b du support 16. Les jeux sont configurés pour que le dispositif ait des raideurs différentes dans au moins deux directions distinctes perpendiculaires à l'axe X.

Les deux directions perpendiculaires à l'axe X sont, de préférence, perpendiculaires entre elles.

Dans ce qui suit, on s'intéresse au cas où les deux extrémités 41a, 41b des secondes colonnettes 41 sont engagées avec jeux dans les orifices 42b, 44b de la bague 12 et du support 16.

Dans l'exemple de réalisation de la figure 3, les premières colonnettes 40 sont alternées avec les secondes colonnettes 41 autour de l'axe X. On comprend qu'au moins une première colonnette 40 peut être comprise entre deux secondes colonnettes 41 autour de l'axe X et qu'au moins une seconde colonnette 41 peut être comprise entre deux premières colonnettes 40 autour de l'axe X. Autrement dit, le nombre de premières colonnettes 40 comprises entre deux secondes colonnettes 41 peut être différent de un. Le nombre de secondes colonnettes 41 comprises entre deux premières colonnettes peut être différent de un également.

Avantageusement, les premières extrémités 40a, 41a des colonnettes 40, 41 ont en section une forme générale circulaire. Les secondes extrémités 40b, 41b ont également avantageusement en section une forme générale circulaire. Dans un autre mode de réalisation, non décrit, les premières extrémités 40a, 41a et les secondes extrémités 40b, 41b peuvent avoir en section une forme générale non circulaire, par exemple oblongue ou elliptique.

La bague 12 a en section axiale une forme générale en L et comprend une partie cylindrique 12b dont une extrémité axiale est reliée à une bride annulaire 12a radialement externe de fixation des colonnettes 40, 41.

La partie cylindrique 12b de la bague 12 comprend à sa périphérie interne une gorge annulaire 12c de roulement des billes du palier 14 et à sa périphérie externe une surface cylindrique externe 12d définissant avec le support 16 un espace annulaire de formation d'un film d'huile d'amortissement.

Le support 16 est partiellement représenté dans les dessins.

Le support 16 comprend une première paroi cylindrique 16b s'étendant autour de la partie cylindrique 12b de la bague 12 et comportant une surface cylindrique interne 16a définissant avec la surface 12d l'espace précité de formation du film d'huile d'amortissement.

Le support 16 comprend une seconde paroi cylindrique 16c s'étendant autour de la première paroi cylindrique 16b, voire également autour de la bride 12a de la bague 12. Les première et seconde parois cylindriques 16b, 16c sont reliées entre elles par une paroi annulaire 16d sensiblement radiale comportant des ouvertures 46 traversées avec jeu par les corps 40c, 41c des colonnettes 40, 41. Avantageusement, les ouvertures 46 ont en section transversale une forme générale circulaire.

Dans l'exemple représenté, on remarque que les colonnettes 40, 41 traversent un espace annulaire formé entre les parois 16b, 16c. La paroi 16d est ici située plutôt à une extrémité axiale de cet espace.

Le support 16 comprend en outre une bride annulaire 16e.

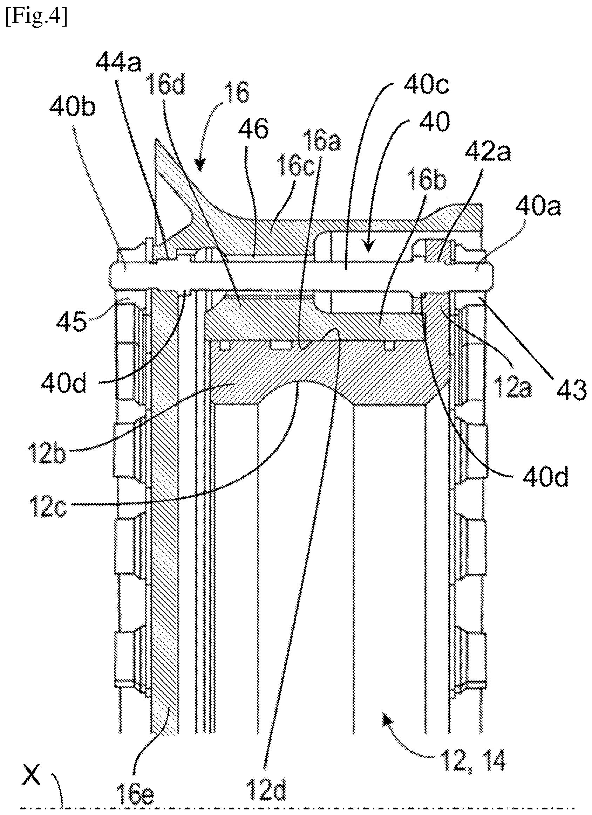

Les orifices 42a, 42b de la bague 12 et les orifices 44a, 44b du support 16 peuvent comprendre des premiers orifices 42a, 44a et des seconds orifices 42b, 44b. Avantageusement, les premiers orifices 42a, 44a ont en section transversale une forme générale circulaire. En variante, non représentée, les premiers orifices 42a, 44a peuvent avoir en section une forme générale non circulaire, par exemple oblongue ou elliptique. De la sorte, les extrémités 40a, 40b correspondantes des premières colonnettes 40 peuvent être engagées sans jeu dans la bague 12 et dans le support 16, comme représenté sur la figure 4 qui montre une vue en coupe du dispositif de la figure 3 selon l'axe de coupe I-I. On comprend qu'en étant engagées sans jeu dans la bague 12 et dans le support 16, les extrémités 40a, 40b des premières colonnettes 40 ont une section circulaire lorsque les premiers orifices 42a, 44a ont en section transversale une forme générale circulaire ou bien les extrémités 40a, 40b des premières colonnettes 40 ont une section non circulaire lorsque les premiers orifices 42a, 44a ont en section transversale une forme générale non circulaire. On comprend également que la dimension de chacune des extrémités 40a, 40b est sensiblement égale à la dimension de chacun des premiers orifices 42a, 44a.

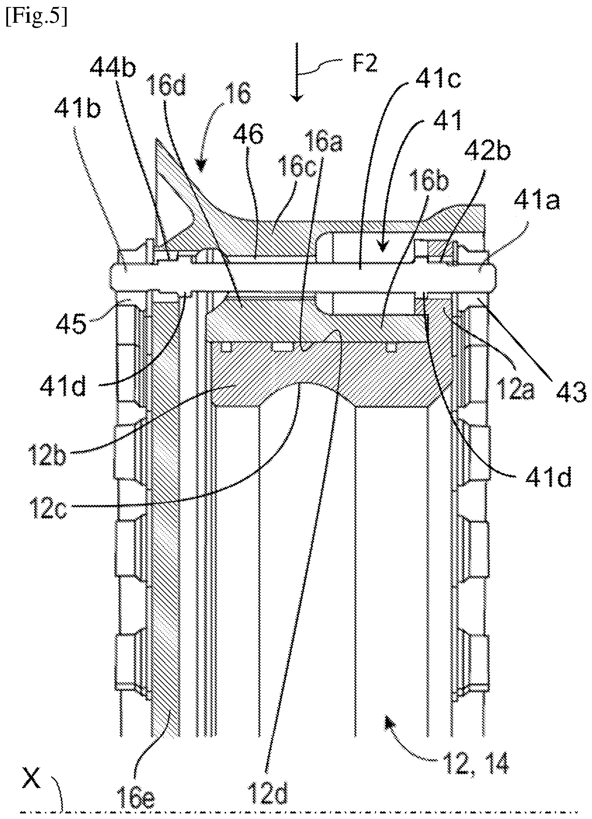

Avantageusement, les seconds orifices 42b, 44b ont en section transversale une forme générale oblongue ou en ellipse. En variante, non représentée, les seconds orifices 42a, 44a peuvent avoir en section une forme générale circulaire. De la sorte, les extrémités 41a, 41b correspondantes des secondes colonnettes 41 peuvent être engagées avec jeux dans la bague 12 et dans le support 16. Comme représenté dans l'exemple de la figure 5 qui montre une vue en coupe du dispositif de la figure 3 selon l'axe de coupe II-II, les seconds orifices 42b, 44b peuvent présenter une forme allongée, de préférence dans une même direction. On comprend que la forme allongée des orifices 42b, 44b implique que ceux-ci ont une première dimension longitudinale plus grande qu'une seconde dimension, sensiblement perpendiculaire à la première. On comprend également que la première dimension longitudinale est supérieure au diamètre des extrémités 41a, 41b des colonnettes 41, et que la seconde dimension est sensiblement égale au diamètre des extrémités 41a, 41b. Autrement dit, il y a un jeu avec les colonnettes 41 uniquement dans une direction longitudinale. Dans une autre forme de réalisation, non représentée, il peut y a voir un jeu entre les extrémités 41a, 41b des secondes colonnettes 41 ayant une section circulaire et les seconds orifices 42b, 44b ayant en section transversale une forme générale circulaire. On comprend que dans cette forme de réalisation, le diamètre des seconds orifices 42b, 44b est supérieur au diamètre des extrémités 41a, 41b et que le jeu est positif de manière uniforme dans toutes les directions. Dans encore une autre forme de réalisation, non représentée, il peut y a voir un jeu entre les extrémités 41a, 41b des secondes colonnettes 41 ayant une section non circulaire, par exemple oblongue ou elliptique, et les seconds orifices 42b, 44b ayant en section transversale une forme générale circulaire. On comprend que, dans cette forme de réalisation, la section transversale des extrémités 41a, 41b peut présenter une forme allongée, de préférence dans une même direction. La forme allongée des extrémités 41a, 41b implique que celles-ci ont une première dimension longitudinale plus grande qu'une seconde dimension, sensiblement perpendiculaire à la première. On comprend alors qu'il y a jeu lorsque le diamètre des seconds orifices 42b, 44b est sensiblement égal à la première dimension longitudinale de la section des extrémités 41a, 41b. Autrement dit, il y un jeu avec les colonnettes 41 uniquement dans une direction perpendiculaire à la première dimension longitudinale.

Les orifices 42a, 42b peuvent être ménagés dans la bride 12a. Les orifices 42a, sont traversés par les extrémités 40a des colonnettes 40 et les orifices 42b sont traversés par les extrémités 41a des colonnettes 41 ; ces extrémités 40a, 41a pouvant être filetées et recevoir des écrous 43 serrés contre la bride 12a.

Les orifices 44a, 44b peuvent être ménagés dans la bride 16e. Les orifices 44a, sont traversés par les extrémités 40b des colonnettes 40 et les orifices 44b sont traversés par les extrémités 41b des colonnettes 41 ; ces extrémités 40b, 41b pouvant être filetées et recevoir des écrous 45 serrés contre la bride 16e.

Le corps 40c, 41c de chaque colonnette 40, 41 peut être relié à chacune des extrémités 40a, 40b, 41a, 41b par des collerettes annulaires 40d, 41d. Les collerettes 40d, 41d peuvent comprendre un méplat pouvant être en appui respectivement sur les brides 16e, 12a du support 16 et de la bague 12, de la sorte, la rotation des colonnettes 40, 41 autour de leur axe longitudinal peut être empêchée.

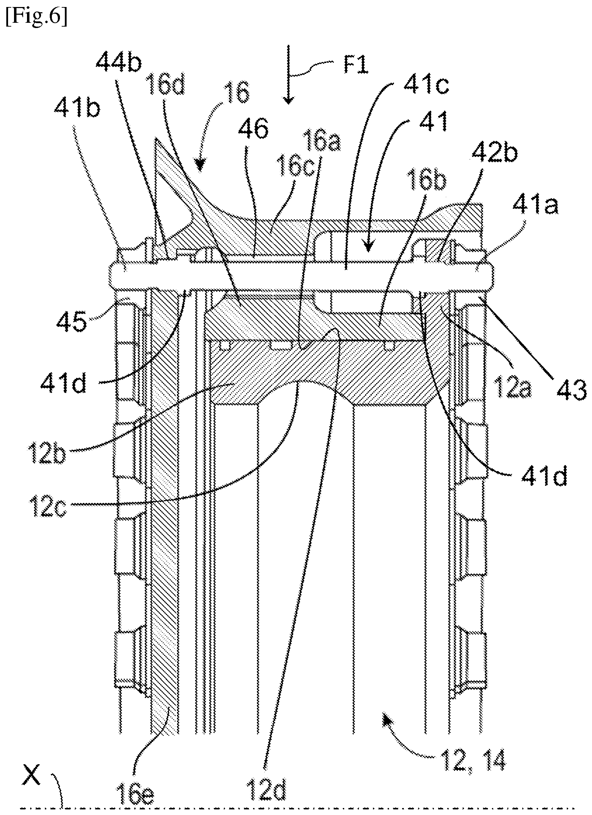

Dans le cas de figure représenté à la figure 3, on comprend que la cage 10 est non axisymétrique par rapport à l'axe X et sa raideur n'est pas non plus axisymétrique. La raideur de la cage 10 dans une direction transversale parallèle aux plans P (flèche F2) est plus importante que la raideur de la cage 10 dans une direction perpendiculaire à ces plans P (flèche F1). En effet, lorsque la cage 10 est sollicitée dans la direction parallèle aux plans P (flèche F2), seules les premières colonnettes 40 travaillent, engendrant une certaine raideur. Les secondes colonnettes 41, engagées avec jeux dans les orifices 42b, 44b de la bague 12 et du support 16, peuvent se déplacer selon la direction de la sollicitation F2 dans le jeu des orifices 42b, 44b. De la sorte, une part de la sollicitation F2 peut être absorbée. Lorsque la cage 10 est sollicitée dans la direction perpendiculaire aux plans P (flèche F1), toutes les colonnettes 40, 41 sont sollicitées, et la raideur de la cage 10 est plus importante. En effet, les secondes colonnettes 41 ne peuvent se déplacer selon cette direction dans les orifices 42b, 44b, comme montré par la figure 6 qui illustre la vue en coupe du dispositif de la figure 3 selon l'axe de coupe III-III, parallèle à la sollicitation F1. Autrement dit, lorsque la cage 10 est sollicitée dans une direction donnée et que les jeux des orifices 42b, 44b sont orientées selon cette même direction donnée, comme par exemple la direction parallèle aux plans P (flèche F2), la raideur est plus faible dans cette direction donnée. On comprend qu'avec une sollicitation du dispositif dans une première direction (flèche F2) perpendiculaire à l'axe X les secondes colonnettes 41 se déplacent dans les jeux, les premières colonnettes 40 restant elles immobiles, et qu'avec une sollicitation du dispositif dans une deuxième direction (flèche F1) perpendiculaire à l'axe X, différente de la première direction, les premières colonnettes 40 et les secondes colonnettes 41 restent immobiles dans leurs orifices 42a, 42b, 44a, 44b respectifs. Des raideurs différentes sont ainsi obtenues selon l'orientation des sollicitations.

L'invention concerne également une turbomachine d'aéronef comportant au moins un dispositif tel que décrit dans ce qui précède.

Le dispositif et la cage souple selon l'invention sont ainsi avantageux dans la mesure où la raideur de la cage est différente selon la position angulaire de l'effort transmis à la cage dans une direction transversale à son axe principal.

## Revendications

1. Dispositif de centrage et de guidage d'un arbre de turbomachine d'aéronef, ce dispositif comportant :
- une bague externe (12) d'un palier à roulement (14), cette bague s'étendant autour d'un axe (X) et comprenant des orifices (42a, 42b) disposés autour de cet axe et orientés parallèlement à cet axe,
- un support annulaire (16) de palier s'étendant autour de l'axe (X) et au moins en partie autour de la bague (12), ce support comprenant des orifices (44a, 44b) disposés autour de cet axe et orientés parallèlement à cet axe, et
- une série de colonnettes (40, 41) de liaison de la bague au support, ces colonnettes étant réparties autour de l'axe (X) et s'étendant sensiblement parallèlement à cet axe, chacune de ces colonnettes comportant une première extrémité longitudinale (40a, 41a) engagée dans un des orifices (42a, 42b) de la bague et une seconde extrémité longitudinale (40b, 41b) engagée dans un des orifices (44a, 44b) du support,
**caractérisé en ce que** certaines desdites colonnettes (40, 41), appelées premières colonnettes (40), ont leurs extrémités (40a, 40b) qui sont engagées sans jeu dans lesdits orifices (42a) de la bague (12) et dans lesdites orifices (44a) du support (16), et les autres colonnettes, appelées secondes colonnettes (41), ont leurs extrémités qui sont engagées avec jeux dans lesdits orifices (42b) de la bague (12) et/ou dans lesdites orifices (44b) du support (16), lesdits jeux étant configurés pour que le dispositif ait des raideurs différentes dans au moins deux directions perpendiculaires audit axe.

2. Dispositif selon la revendication précédente, dans lequel lesdites directions sont perpendiculaires entre elles.

3. Dispositif selon l'une des revendications précédentes, dans lequel lesdites premières colonnettes (40) sont alternées avec lesdites secondes colonnettes (41) autour dudit axe.

4. Dispositif selon l'une des revendications précédentes, dans lequel lesdites premières et secondes extrémités des colonnettes (40, 41) ont en section une forme circulaire.

5. Dispositif selon la revendication précédente, dans lequel lesdits orifices de la bague (12) et du support (16) comprennent des premiers orifices (42a, 44a) ayant en section une forme circulaire, et des seconds orifices (42b, 44b) ayant en section une forme oblongue ou elliptique.

6. Dispositif selon la revendication précédente, dans lequel lesdits seconds orifices (42b, 44b) sont orientés de façon à ce qu'ils présentent une forme allongée dans une même direction.

7. Dispositif selon l'une des revendications précédentes, dans lequel les orifices sont ménagés dans des brides annulaires (12a, 16e) de la bague et du support (16).

8. Dispositif selon l'une des revendications précédentes, dans lequel la bague externe (12) comprend une surface cylindrique externe (12a) définissant avec une surface cylindrique interne (16d) du support (16) un espace annulaire de formation d'un film d'huile d'amortissement.

9. Turbomachine d'aéronef, comportant au moins un dispositif selon l'une des revendications précédentes.

## Patentansprüche

1. Zentrier- und Führungsvorrichtung einer Luftfahrzeug-Turbotriebwerkwelle, wobei diese Vorrichtung umfasst:
- einen externen Dichtungsring (12) eines Wälzlagers (14), wobei dieser Dichtungsring sich um eine Achse (X) herum erstreckt und Bohrungen (42a, 42b) umfasst, die um diese Achse herum angeordnet und parallel zu dieser Achse orientiert sind,
- eine ringförmige Lagerhalterung (16), die sich um die Achse (X) und mindestens um den Dichtungsring (12) herum erstreckt, wobei diese Halterung Bohrungen (44a, 44b) umfasst, die um diese Achse herum angeordnet und parallel zu dieser Achse orientiert sind, und
eine Reihe von Säulen (40, 41) zur Verbindung des Rings mit der Halterung, wobei diese Säulen um die Achse (X) herum verteilt sind und sich im Wesentlichen parallel zu dieser Achse erstrecken, wobei jede dieser Säule ein erstes Längsende (40a, 41a) im Eingriff mit einer der Bohrungen (42a, 42b) des Rings, und ein zweites Längsende (40b, 41b) im Eingriff mit einer der Bohrungen (44a, 44b) der Halterung (16), umfasst,
**dadurch gekennzeichnet, dass** bei einigen der Säulen (40, 41), als erste Säulen (40) bezeichnet, ihre Enden (40a, 40b) ohne Spiel in die Bohrungen (42a) des Rings (12) und in die Bohrungen (44a) der Halterung (16) eingreifen, und bei den anderen Säulen, als zweite Säulen (41) bezeichnet, ihre Enden mit einem Spiel in die Bohrungen (42b) des Rings (12) und/oder in die Bohrungen (44b) der Halterung (16) eingreifen, wobei die Spiele so ausgelegt sind, dass die Vorrichtung in mindestens zwei Richtungen senkrecht zur Achse unterschiedliche Steifheiten aufweist.

2. Vorrichtung nach dem vorstehenden Anspruch, wobei die Richtungen senkrecht zueinander sind.

3. Vorrichtung nach einem der vorstehenden Ansprüche, wobei sich die ersten Säulen (40) mit den zweiten Säulen (41) um die Achse herum abwechseln.

4. Vorrichtung nach einem der vorstehenden Ansprüche, wobei die ersten und zweiten Enden der Säulen (40, 41) im Querschnitt kreisförmig sind.

5. Vorrichtung nach dem vorstehenden Anspruch, wobei die Bohrungen des Rings (12) und der Halterung (16) erste Bohrungen (42a, 44a) umfassen, die im Querschnitt kreisförmig sind, und zweite Bohrungen (42b, 44b), die im Querschnitt länglich oder elliptisch sind.

6. Vorrichtung nach dem vorstehenden Anspruch, wobei die zweiten Bohrungen (42b, 44b) derart ausgerichtet sind, dass sie in einer gleichen Richtung eine langgestreckte Form aufweisen.

7. Vorrichtung nach einem der vorstehenden Ansprüche, wobei die Bohrungen in ringförmigen Flanschen (12a, 16e) des Rings und der Halterung (16) ausgebildet sind.

8. Vorrichtung nach einem der vorstehenden Ansprüche, wobei der externe Dichtungsring (12) eine externe zylindrische Oberfläche (12e) umfasst, die mit einer internen zylindrischen Oberfläche (16d) der Halterung (16) einen ringförmigen Raum zur Bildung eines Dämpfungsölfilms definiert.

9. Luftfahrzeug-Turbotriebwerk, das mindestens eine Vorrichtung nach einem der vorstehenden Ansprüche umfasst.

## Claims

1. A device for centring and guiding an aircraft turbine engine shaft, this device comprising:
- an outer ring (12) of a rolling bearing (14), this ring extending about an axis (X) and comprising orifices (42a, 42b) arranged about this axis and oriented parallel to this axis,
- an annular bearing support (16) extending around the axis (X) and at least partly around the ring (12), this support comprising orifices (44a, 44b) arranged around this axis and oriented parallel to this axis, and
- a series of studs (40, 41) connecting the ring to the support, these studs being distributed around the axis (X) and extending substantially parallel to this axis, each of these studs comprising a first longitudinal end (40a, 41a) engaged in one of the orifices (42a, 42b) of the ring and a second longitudinal end (40b, 41b) engaged in one of the orifices (44a, 44b) of the support,
**characterised in that** some of said studs (40, 41), referred to as first studs (40), have their ends (40a, 40b) engaged without clearance in said orifices (42a) of the ring (12) and in said orifices (44a) of the support (16), and the other studs, referred to as second studs (41), have their ends engaged with clearances in said orifices (42b) of the ring (12) and/or in said orifices (44b) of the support (16), said clearances being configured so that the device has different stiffnesses in at least two directions perpendicular to said axis.

2. The device according to the preceding claim, wherein said directions are perpendicular to each other.

3. The device according to one of the preceding claims, wherein said first studs (40) alternate with said second studs (41) around said axis.

4. The device according to one of the preceding claims, wherein said first and second ends of the studs (40, 41) are circular in cross-section.

5. The device according to the preceding claim, wherein said orifices of the ring (12) and of the support (16) comprise first orifices (42a, 44a) having a circular cross-sectional shape, and second orifices (42b, 44b) having an oblong or elliptical cross-sectional shape.

6. The device according to the preceding claim, wherein said second orifices (42b, 44b) are oriented so that they have an elongated shape in the same direction.

7. The device according to one of the preceding claims, wherein the orifices are formed in annular flanges (12a, 16e) of the ring and of the support (16).

8. The device according to one of the preceding claims, wherein the outer ring (12) comprises an outer cylindrical surface (12a) defining with an inner cylindrical surface (16d) of the support (16) an annular space for forming a damping oil film.

9. An aircraft turbine engine, comprising at least one device according to one of the preceding claims.
